(19) Europäisches Patentamt / European Patent Office / Office européen des brevets

(11) **EP 4 174 848 A1**

(12) **EUROPEAN PATENT APPLICATION**

(43) Date of publication:
**03.05.2023 Bulletin 2023/18**

(21) Application number: **21205738.4**

(22) Date of filing: **29.10.2021**

(51) International Patent Classification (IPC):
**G10L 15/26** (2006.01)     **G10L 15/18** (2013.01)

(52) Cooperative Patent Classification (CPC):
**G10L 15/26; G06F 40/289; G06F 40/30;**
G06F 40/205; G10L 15/1822

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Televic Rail NV**
**8870 Izegem (BE)**

(72) Inventors:
• **LAUWEREINS, Steven**
  **B-9700 Oudenaarde (BE)**
• **AELTER, Bert**
  **B-9840 De Pinte (BE)**
• **VAN STEENKISTE, Tom**
  **B-8510 Marke (BE)**
• **VANDECAPPELLE, Michiel**
  **B-8500 Kortrijk (BE)**

(74) Representative: **IPLodge bv**
**Technologielaan 9**
**3001 Heverlee (BE)**

(54) **IMPROVED SPEECH TO TEXT METHOD AND SYSTEM**

(57) The invention concerns a method for converting speech to text for a speech communication system (SCS), comprising the steps of: capturing a speech; converting the speech to a text by a speech-to-text (STT) engine, and making the text available, wherein the STT engine is configured to perform the steps of: a) converting the speech to a set of text fragments using a generic speech recognition algorithm; b) for each text fragment: checking if one or more words of the text fragment comprise a meaning corresponding to one of a predefined set of one or more semantic options; c) if one or more words of the text fragment corresponds to a semantic option: comparing said one or more words with a set of entries in a database corresponding to said semantic option and computing a trust level score for each of said entries, thereby obtaining an optimal entry having the highest-trust level score, d) correcting each text fragment by replacing the one or more words which comprise a meaning corresponding to one of a predefined set of one or more semantic options with said optimal entry, thereby obtaining a set of corrected text fragments and e) converting the set of corrected text fragments to a presentable text, wherein the database corresponding to the semantic option is adaptable, and the database corresponding to the semantic option is configured to be updated on the basis of a current state of the SCS.

Fig. 3

EP 4 174 848 A1

## Description

## Technical field

The present invention relates to a speech-to-text (STT) method and system for a speech communication system, e.g. a passenger information system on public transport such as a train or a conference system for moderated meetings.

## Background

A passenger information system typically consists of several components, including a public address system for vocal announcements by the train guard and an automatic passenger information system that provides automatically audio, text and video announcements. This automatic passenger information system typically consists of several components, such as a location tracking engine, a route database and a trigger engine.

A conference system for moderated meetings consists of several components, including (but not limited to) microphones, loudspeakers and a meeting central unit which consists of several components, such as a meeting agenda database, a participant list, optionally a database of meeting minutes of past meetings.

Speech-to-text (STT) algorithms and systems are the subject of ongoing development by a multitude of people and organisations. STT is also known as speech recognition, automatic speech recognition (ASR) and computer speech recognition. STT refers to an interdisciplinary subfield of computer science and computational linguistics that develops methodologies and technologies that enable the recognition and translation of spoken language into text by computers.

Basically, STT can be achieved by capturing the speech by a microphone or other speech recording device, provide the recorded speech to an STT engine which is configured to take as input a speech or speech fragment and deliver a text as output.

An important application of an STT engine is to allow speech to be shown as text to people who did not hear the spoken speech for any reason, such as noisy environment, distraction, a hearing problem, etc. or who wanted to check if they heard correctly. Sometimes the information contained in the speech is important, in which case it is necessary, not only to show the speech as a text, but also to show a correct text containing the correct information contained in the speech. The above methods for speech recognition can be labelled as general-purpose speech recognition, which are typically arranged to convert all speech to text. However, note that the quality of the STT conversion can be highly dependent on how the STT is trained. For instance, if the STT engine is trained using speech fragments from the field of medicine, then the STT engine can be expected to do very well in speech recognition of health-related speech fragments, but perhaps less in speech recognition of a Shakespeare play.

Generic speech recognition algorithms are known in the art. A number of techniques are known for STT engines, e.g. hidden Markov models, dynamic time warping (DTW)-based speech recognition, neural networks, deep feedforward and recurrent neural networks, end-to-end automatic speech recognition, etc.

Both acoustic modeling and language modeling are important parts of modern statistically-based speech recognition algorithms. Hidden Markov models (HMMs) are widely used in many systems. Language modeling is also used in many other natural language processing applications such as document classification or statistical machine translation.

Modern general-purpose speech recognition systems are based on Hidden Markov Models. These are statistical models that output a sequence of symbols or quantities.

Decoding of the speech (the term for what happens when the system is presented with a new utterance and must compute the most likely source sentence) may use the Viterbi algorithm to find the best path, and here there is a choice between dynamically creating a combination hidden Markov model, which includes both the acoustic and language model information and combining it statically beforehand (the finite state transducer, or FST, approach).

A possible improvement to decoding is to keep a set of good candidates instead of just keeping the best candidate, and to use a better scoring function (re scoring) to rate these good candidates so that we may pick the best one according to this refined score. The set of candidates can be kept either as a list (the N-best list approach) or as a subset of the models (a lattice). The score basically relates to a confidence level. Hence, a confidence level can be attributed on the basis of the score for each candidate text, and also for each candidate word, letter and/or phoneme of the text.

A well-known application has been automatic speech recognition (ASR), to cope with different speaking speeds. In general, it is a method that allows a computer to find an optimal match between two given sequences (e.g., time series) with certain restrictions. That is, the sequences are "warped" non-linearly to match each other. This sequence alignment method is often used in the context of hidden Markov models.

Neural networks emerged as an attractive acoustic modeling approach in ASR in the late 1980s. Since then, neural networks have been used in many aspects of speech recognition such as phoneme classification, phoneme classification through multi-objective evolutionary algorithms, isolated word recognition, audiovisual speech recognition, audiovisual speaker recognition and speaker adaptation.

Deep Neural Networks and Denoising Autoencoders are also possible. A deep feedforward neural network (DNN) is an artificial neural network with multiple hidden layers of units between the input and output layers. Similar to shallow neural networks, DNNs can model complex non-linear relationships. DNN architectures generate compositional models, where extra layers enable composition of features from lower layers, giving a huge learning capacity and thus the potential of modeling complex patterns of speech data.

Since 2014, there has been much research interest in "end-to-end" ASR. Traditional phonetic-based (i.e., all HMM-based model) approaches required separate components and training for the pronunciation, acoustic, and language model. End-to-end models jointly learn all the components of the speech recognizer. This is valuable since it simplifies the training process and deployment process. For example, an n-gram language model is required for all HMM-based systems, and a typical n-gram language model often takes several gigabytes in memory making them impractical to deploy on mobile devices. Consequently, modern commercial ASR systems are deployed on the cloud and require a network connection as opposed to the device locally.

ASR can be achieved by Connectionist Temporal Classification (CTC)-based systems.

An alternative approach to CTC-based models are attention-based models.

The inventors have found that a general-purpose STT engine tends to be lacking accuracy in the specific field of passenger information systems (PIS), e.g. for public transport, and in particular for PIS's for trains and stations. PIS's present a specific context which has its impact on the semantics of the speech which can be typically entered as input to a PIS. Additionally, the inventors have also found that a general-purpose STT engine tends to be lacking accuracy in the specific field of conferencing systems, e.g. for moderated meetings, and in particular for conferencing systems for parliaments, municipalities, boardrooms etc. Moderated meetings present a specific context which has its impact on the semantics of the speech which can be typically uttered during moderated meetings. A method for integration of semantic context information is disclosed in US patent 9,558,743 B2. This patent discloses a computer-implemented method which includes receiving, at a computer system, a request to predict a next word in a dialog being uttered by a speaker; accessing, by the computer system, a neural network comprising i) an input layer, ii) one or more hidden layers, and iii) an output layer; identifying the local context for the dialog of the speaker; selecting, by the computer system and using a semantic model, at least one vector that represents the semantic context for the dialog; applying input to the input layer of the neural network, the input comprising i) the local context of the dialog and ii) the values for the at least one vector; generating probability values for at least a portion of the candidate words; and providing, by the computer system and based on the probability values, information that identifies one or more of the candidate words. Hereby the local context refers to one or more previous words, and the semantic context can be modeled based on information that is specific to a particular user, such as transcribed speech (e.g., previously transcribed speech) for and correspondence that was written by the user (e.g., emails, text messages, social network posts, blog entries). Additionally, the semantic context can be modeled to include previous dialogs that are specific to a current dialog that is being transcribed, such by using verbal and/or written correspondence between two users who are taking part in the current dialog. In another example, the accuracy of semantically weighty words can be improved rather than function words, which can provide an improvement beyond what the raw word accuracy may indicate. The semantic context can be based on transcribed speech samples and written samples that provide an indication of how words are used in various contexts. The transcribed speech samples and the written samples that are used to form the semantic context can be specific to the speaker (user A), specific to the current dialog between users (conversation between user A and user B), and/or can be generic and not specific to either the speaker or the current dialog. For instance, the transcribed speech samples, which may be transcribed by humans and/or by machines, can include generic transcribed speech samples that can be from other users who are different from users A and B. For instance, the generic transcribed speech samples can be transcriptions of media content (e.g., television shows, movies) and/or public meetings and hearings (e.g., transcriptions of congressional hearings). The generic transcribed speech samples may be selected based on a variety of factors, such as the language for the transcribed speech samples (e.g., American English), the similarity between demographics (e.g., age, gender, geographic location) of the transcribed speaker with regard to the current speaker (user A), and/or accuracy of the transcribed speech sample (e.g., high level of confidence for the transcription, transcription is verified to be accurate (e.g., training data)). It should be noted that the semantic context is based on previous speech excerpts from a related context which are used to train the neural network.

The above prior art document tends to provide a possible improvement over generic STT engine by including a semantic context as input to a neural network, and to train the network to recognize the semantic context, such method may not provide enough accuracy for PIS in public transport or for conferencing systems in moderated meetings, or can at least be improved upon.

The present invention therefore aims to provide an improved speech-to-text method which is particularly suited for a passenger information system at public transport accommodations and for conferencing systems for moderated meetings.

## Summary of the invention

The present invention concerns a method for converting speech to text for a speech communication system (SCS), comprising the steps of:

- capturing a speech;
- converting the speech to a text by a speech-to-text (STT) engine, and
- making the text available,

wherein the STT engine is configured to perform the steps of:

a) converting the speech to a set of text fragments using a generic speech recognition algorithm;
b) for each text fragment: checking if one or more words of the text fragment comprise a meaning corresponding to one of a predefined set of one or more semantic options;
c) if one or more words of the text fragment corresponds to a semantic option: comparing said one or more words with a set of entries in a database corresponding to said semantic option and computing a trust level score for each of said entries, thereby obtaining an optimal entry having the highest-trust level score,
d) correcting each text fragment by replacing the one or more words which comprise a meaning corresponding to one of a predefined set of one or more semantic options with said optimal entry, thereby obtaining a set of corrected text fragments and
e) converting the set of corrected text fragments to a presentable text,

wherein the database corresponding to the semantic option is adaptable, and the database corresponding to the semantic option is configured to be updated on the basis of a current state of the SCS.

The present invention also concerns a speech communication system (SCS), comprising a speech-to-text conversion system, comprising a speech capturing device, a processing unit comprising a speech-to-text (STT) engine and a text handling device, wherein the STT engine is configured to perform the steps of:

a) converting the speech captured by the speech capturing device to a set of text fragments using a generic speech recognition algorithm;
b) for each text fragment: checking if one or more words of the text fragment comprise a meaning corresponding to one of a predefined set of one or more semantic options;
c) if one or more words of the text fragment corresponds to a semantic option: comparing said one or more words with a set of entries in a database corresponding to said semantic option and computing a trust level score for each of said entries, thereby obtaining an optimal entry having the highest-trust level score,
d) correcting each text fragment by replacing the one or more words which comprise a meaning corresponding to one of a predefined set of one or more semantic options with said optimal entry, thereby obtaining a set of corrected text fragments and
e) converting the set of corrected text fragments to a presentable text,

wherein the database corresponding to the semantic option is adaptable, and the database corresponding to the semantic option is configured to be updated on the basis of a current state of the SCS,
whereby the SCS is further configured to make the presentable text available by the text handling device.
It should be clear that the SCS of the present invention is capable of, and preferably is configured for, carrying out the method of the present invention.
Preferably the speech communication system is a passenger information system (PIS) or a conferencing system (CS). The state of PIS's tend to change both regularly, e.g. according to a schedule, but also irregularly, due to delays or unforeseeable events. Consequently the present invention is particularly applicable for use with a passenger information system, since the speech is converted to a semantics-based corrected text, whereby the corrections are based on up-to-date information for a pre-defined set of semantic options, such as station information, location information, arrival times, departure times, delay times, distance to destination, current transportation speed, etc. The state of CS's tend to change both regularly, e.g., due to the meeting subject, but also irregularly, e.g., due to experts called into the meeting, unforeseen agenda changes. Consequently, the present invention is particularly applicable for use with a conferencing system, since the speech is converted to a semantics-based corrected text, whereby the corrections are based on up-to-date information for a pre-defined set of semantic options, such as meeting participants, subject related terminology, law code, country names, abbreviations, subject related person's name, political party names, currencies, numbers (e.g., budgets), etc. Also meeting minutes, being manually corrected or not, of previous meetings can be used as an information source.

**Overview of the figures**

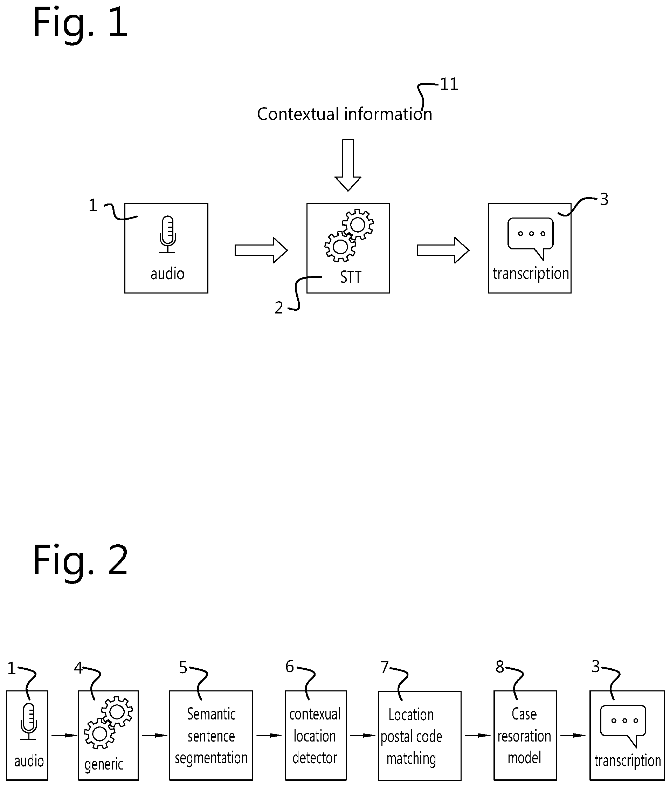

**Figure 1** illustrates the general lay-out of the method according to the present invention.

**Figures 2, 3 and 12** illustrate embodiments of the present invention.

**Figure 4** illustrates the steps performed by an STT engine in accordance with the present invention.

**Figures 5-6** compare the performance of a method and system according to the present invention with prior art speech recognition methods and systems.

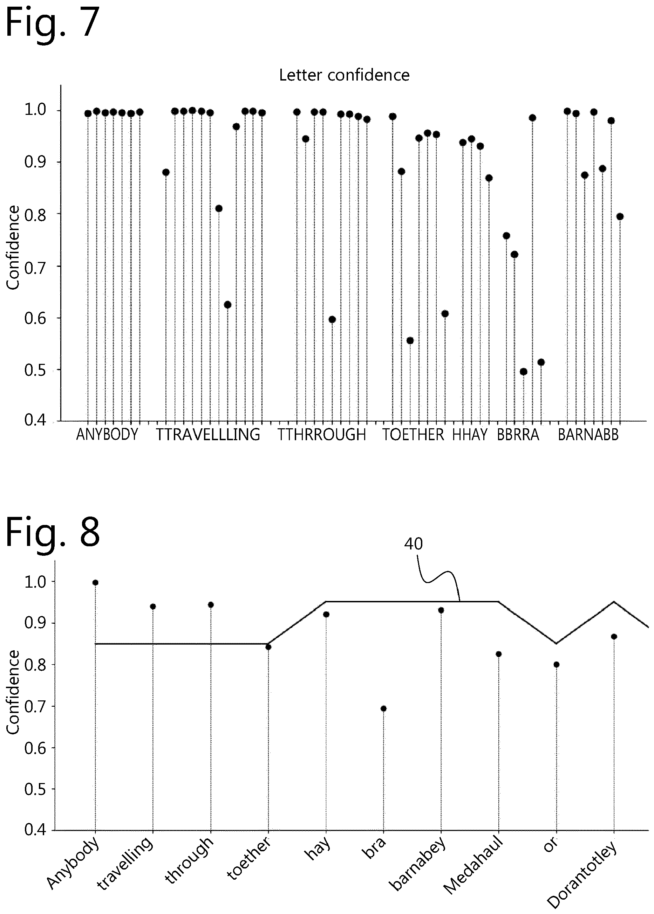

The confidence level provided by a generic speech recognition algorithm for letters is illustrated in **figure 7.**

**Figure 8** illustrates confidence levels for words provided by a generic speech recognition algorithm and a confidence level threshold.

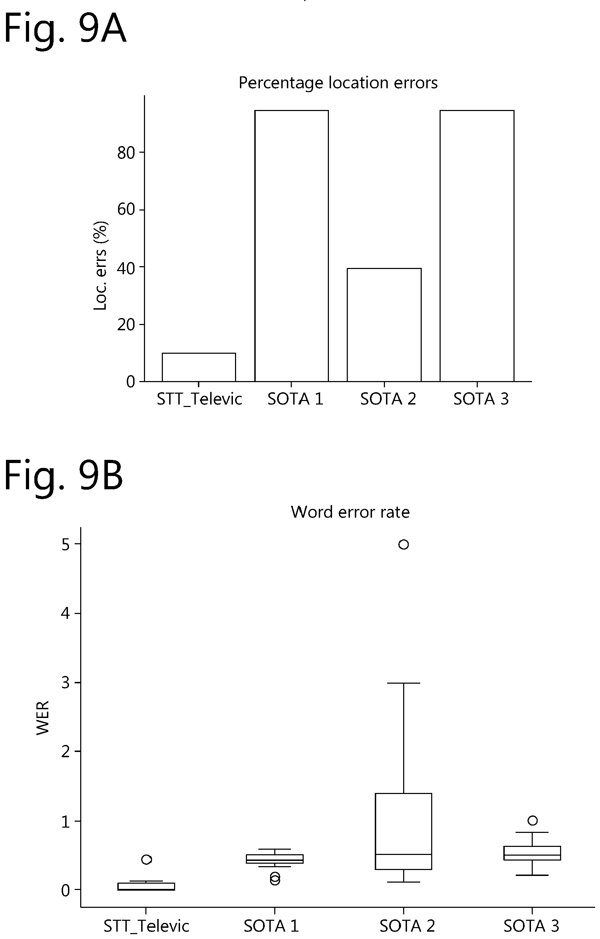

**Figures 9A and 9B** illustrate that the method and system of the present invention perform better than prior art methods.

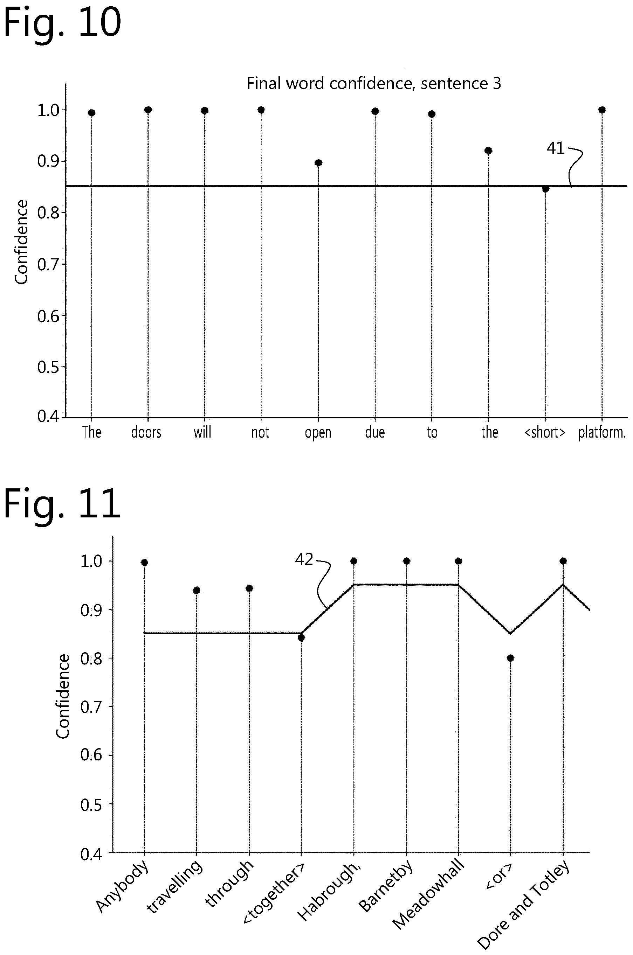

Results of the comparison and correction steps d) and e) in accordance with the present invention, are illustrated in **figures 10 and 11.**

**Detailed discussion of the invention**

In the following, references are made to the figures, which serve to illustrate the present invention.
As discussed above, the invention concerns a method for converting speech to text for a speech communication system (SCS). The three main steps of the method are:

- capturing a speech (1);
- converting the speech to a text by a speech-to-text (STT) engine (2), and
- making the text available (3).

Basically, an SCS within the context of the present invention is designed to present up-to-date information from a sender to a recipient. In an embodiment of the present invention, the SCS is one-way, meaning that there is a clear distinction between sender and recipient. In another embodiment, the SCS is two-way, meaning that the sender and recipient can exchange places, e.g. in case the recipient can respond to the message of the recipient with a response message in the opposite way. In the present invention, the speech tends to comprise an up-to-date message which is spoken by a sender. The method therefor requires a step of capturing this speech, preferably in real-time. The method then proceeds to produce a text which corresponds faithfully to the speech. Finally, the text thus obtained needs to be made available, typically to the intended recipient. The text may be made available by presentation, preferably real-time or nearly real-time presentation. The text may, additionally or alternatively, be made available by storing the text, preferably in a database, e.g. for future use or for easy distribution. Presentation of the text may preferably done by showing the text to the recipient, e.g. on a screen. In an embodiment of the system of the present invention, the text handling device preferably comprises a presentation device configured for presenting the presentable text, and/or a text storage device configured for storing the text, preferably in a database, e.g. for future use or for easy distribution.

The step of converting the speech to a text is performed by a speech-to-text engine. Preferably, the STT engine is implemented on a processing unit. The processing unit preferably comprises at least a processor and a memory device, whereby the processor is provided with code to perform the STT conversion. The STT engine in the present invention, is provided with contextual data (11), such as GPS data, route data, timetable data, etc. for PIS's, or with contextual data (11), such as meeting participants, subject related terminology, law code, numbers, etc. for CS's.
Capturing the speech may be performed by a microphone, preferably connected to a processing and recording system. Furthermore, capturing the speech may comprise applying noise suppression (9), which preferably is achieved by training and/or retraining a noise model (10). In an embodiment, the step of capturing the speech is initiated by a trigger (12). This trigger may be a button pressed by the sender, or a sound volume detected by the microphone which is above a predefined volume threshold.
The STT engine is configured to perform the step of:

a) converting the speech to a set of text fragments using a generic speech recognition algorithm (4);

This step a) basically performs two things: it converts the speech to a text, and it provides the text over a set of text fragments. In an embodiment, step a) comprises:

- first composing a set of speech fragments from the speech and then converting each speech fragment to a text fragment using the generic speech recognition algorithm (14), thereby obtaining the set of text fragments, or
- first converting the speech to a text using a generic speech recognition algorithm, and then composing a set of text fragments from said text, or
- first composing a set of speech fragments from the speech and then converting each speech fragment to a text fragment with an accompanying confidence level using the generic speech recognition algorithm (14), thereby obtaining the set of text fragments, or
- first converting the speech to a text using a generic speech recognition algorithm, and then composing a set of text fragments with an accompanying confidence level from said text.

Herein, the set of text fragments may comprise 1, 2, 3, 4, 5, 6, 7, 8, 9, 10 or more text fragments.
The set of text fragments hence preferably are, or at least can be, ordered with respect to each other chronologically, i.e. a first text fragment corresponding to a first portion of the speech, a second text fragment to a second portion of the speech, and so on.

Distributing the speech or the text over a set of text fragments allows to better handle longer speeches, and allows to present the text in almost real-time, i.e. the speech can already be presented as text while the speech is still ongoing. In this respect, step a) preferably comprises first composing a set of speech fragments from the speech and then converting each speech fragment to a text fragment using the generic speech recognition algorithm, thereby obtaining the set of text fragments. In a more preferred embodiment, the set of speech fragments are obtained by taking fixed-width speech fragments from the speech (13). The fixed-width may preferably be a fixed-time-width, such as between 1s and 15s, more preferably between 2s and 10s, such as 2s, 3s, 4s, 5s, 6s, 7s, 8s, 9s, 10s or any value therebetween. Preferably, at least two of the set of speech fragments comprise a partially overlapping speech portion (13). More preferably the set of speech fragments are ordered chronologically, whereby adjacent speech fragments, preferably all pairs of adjacent speech fragments, comprise an overlapping speech portion. This can be preferably achieved by taking fixed-width overlapping speech portions. Preferably the size of the fixed-width overlapping speech portion is a fraction of the size of the fixed-width speech fragment, said fraction preferably between 1% and 90%, more preferably between 2% and 80%, still more preferably between 3% and 75%, yet more preferably between 5% and 70%, such as 5%, 10%, 15%, 20%, 25%, 30%, 35%, 40%, 45%, 50%, 55%, 60%, 65%, 70% or any value therebetween, most preferably at least 50%. Since the present invention relates to providing semantics-based corrections, it is favourable to ensure that the context in which certain words occur is not changed by cutting the text in text fragments. This can be achieved by using overlapping text fragments and/or by semantic sentence segmentation.

In an embodiment, at least two of the set of text fragments comprise partially overlapping text. More preferably the set of text fragments are ordered chronologically, whereby adjacent text fragments, preferably all pairs of adjacent text fragments, comprise an overlapping text portion. For instance, the first text fragment comprises an end portion which corresponds to a beginning portion of the second text fragment, the second comprises an end portion which corresponds to a beginning portion of the third text fragment, and so on.

Alternatively, semantic sentence segmentation is performed on the set of text fragments. Preferably this leads to a set of non-overlapping text fragments, each text fragment relating to a contextually meaningful text fragment, preferably each text fragment relating to a sentence. In an embodiment, the set of text fragments undergo a sequence alignment (15). This may comprise removing at least some of the overlapping text portions.

In an embodiment, step a) comprises performing a semantic sentence segmentation (5). Sentence segmentation is a technique which allows recognizing the end and/or beginning of a sentence within a text fragment. Preferably, semantic sentence segmentation comprises the steps of:

- sentence splitting (16), and
- semantics-based and/or syntaxis-based sentence parsing (17),

whereby said steps may preferably be performed multiple times in order to find the optimal semantic sentence segmentation.

In a preferred embodiment, at least one, and preferably all, of the set of text fragments obtained in step a) essentially coincide with a sentence. This can be achieved preferably by first composing a set of speech fragments from the speech and then converting each speech fragment to a text fragment using the generic speech recognition algorithm, thereby obtaining the set of text fragments. In a more preferred embodiment, the set of speech fragments are obtained by taking fixed-width speech fragments from the speech (13). The fixed-width may preferably be a fixed-time-width, such as between 1s and 15s, more preferably between 2s and 10s, such as 2s, 3s, 4s, 5s, 6s, 7s, 8s, 9s, 10s or any value therebetween. Preferably, at least two of the set of speech fragments comprise a partially overlapping speech portion (13). More preferably the set of speech fragments are ordered chronologically. Then the set of speech fragments can be converted to a set of intermediary text fragments using a generic speech recognition algorithm. The set of intermediary text fragments can then be processed to remove overlapping text and the thus processed intermediary text fragments can be checked for the presence of a sentence ending. Note that preferably, the generic speech recognition algorithm converts empty speech into a pause character of a predefined type, the type of pause character preferably depending on the duration of the empty speech. A sentence ending may then be identified by checking for pause characters in the intermediary text fragments. The set of intermediary text fragments can then be redistributed in a set of text fragments, at least one, and preferably each, of the text fragments corresponding to a sentence.

Each text fragment consists of a set of words. In a preferred embodiment, the step a) comprises the step of:
a1) providing a confidence level for one or more words, and preferably for each word, of a text fragment, preferably providing a confidence level for each word in each text fragment.

Generic speech recognition algorithms typically compute a confidence level for letters and/or words to present an optimized speech-to-text conversion. Hence, it is possible to use this computed confidence level for the letters and/or words in the present invention. Providing a confidence level for the words obtained with the generic speech recognition algorithm allows better comparison and correction in later steps of the present invention.

The confidence level provided by a generic speech recognition algorithm for letters is illustrated in fig. 7. There, a speech fragment from the speech "anybody travelling through to either Habrough, Barnetby, Meadowhall or Dore and Totley, please ensure you travel in the first five coaches" is converted to letter groups words separated by pause characters, with a confidence level, given in the line-bar diagram shown in fig. 7. Note that many letters are doubly recognized. The generic speech recognition algorithm is capable of producing an initial text fragment as shown in fig. 8: "anybody travelling through toether hay bra barnaby medahaul or dorantotley", providing confidence levels (shown as a line-bar diagram) for each word.

The STT engine is further configured to perform the step of:

b) for each text fragment: checking (6) if one or more words of the text fragment comprise a meaning corresponding to one of a predefined set of one or more semantic options (18, 18a-18g, 18h-18n);

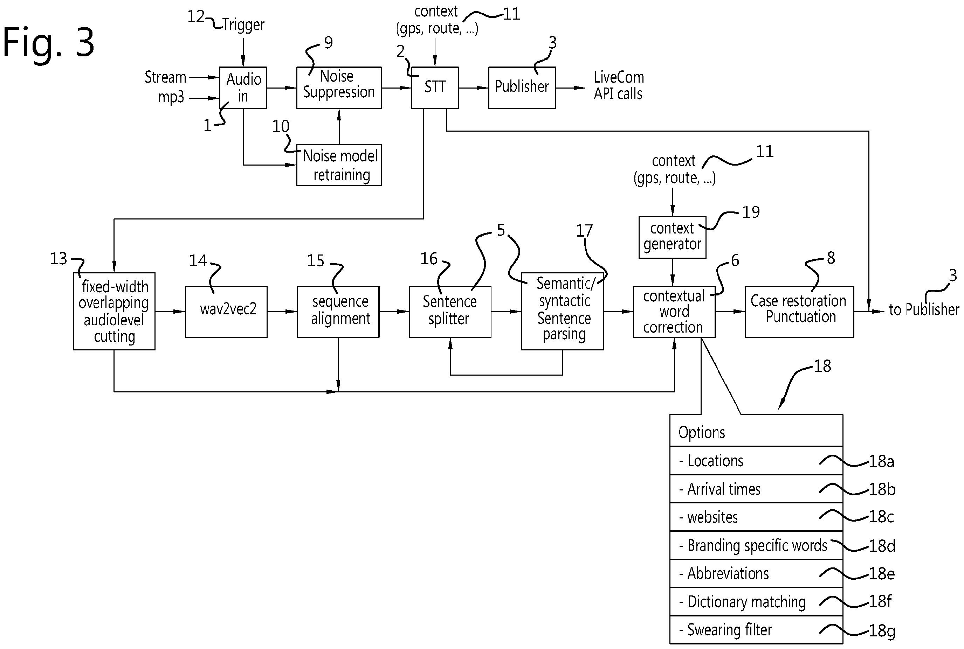

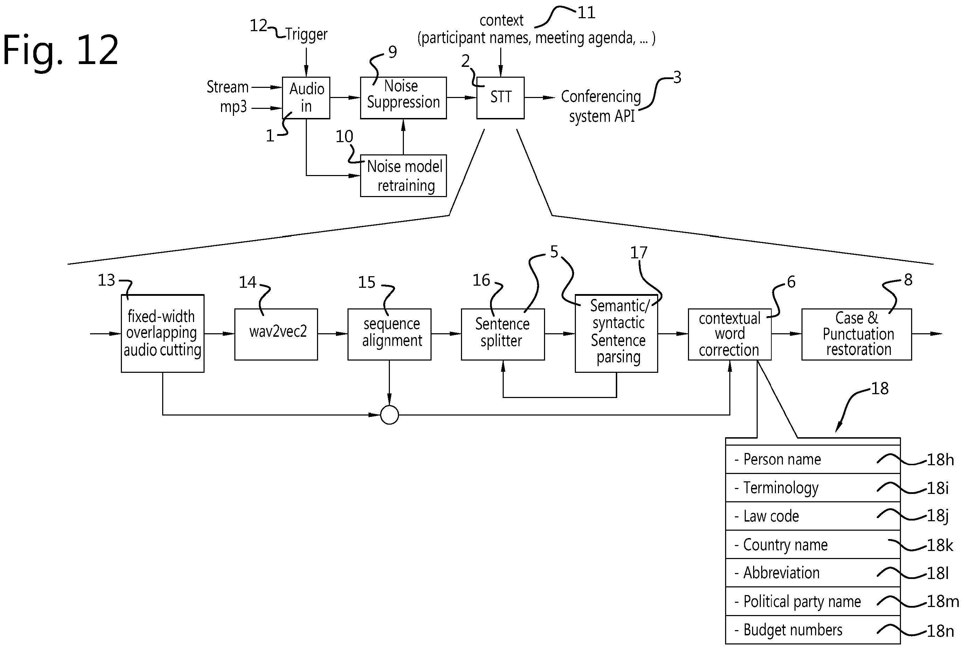

Herein, a semantic option refers to a particular meaning given to a word or a set of words, i.e. it is a semantic classification of the word or the set of words. The following are examples of semantic options: a location name, a departure time, an arrival time, a carriage number, a destination name, a transport velocity, a number, a date, an event, a fact, a language, a law, a direction, a product, a person's name, etc. In fig. 3, the semantic options comprise: locations (18a), arrival times (18b), websites (18c), branding specific words (18d), abbreviations (18e), dictionary matching (18f), swearing words (18g). These semantic options (18a-g) are particularly preferred for a PIS. In fig. 12, the semantic options comprise: person name (18h), terminology (18i), law code (18j), country name (18k), abbreviation (18l), political party name (18m), budget numbers (18n). These semantic options (18h-n) are particularly preferred for a CS. The step b) can also be described as performing named entity recognition to each text fragment and classifying one or more words of the text fragment as one of a predefined set of one or more semantic options.

Named-entity recognition (NER) (also known as (named) entity identification, entity chunking, and entity extraction) is a subtask of information extraction that seeks to locate and classify named entities mentioned in unstructured text into pre-defined categories such as person names, organizations, locations, medical codes, time expressions, quantities, monetary values, percentages, etc.

Most research on NER systems has been structured as taking an unannotated block of text, such as this one:

Jim bought 300 shares of Acme Corp. in 2006.

And producing an annotated block of text that highlights the names of entities:

[Jim]$_{Person}$ bought 300 shares of [Acme Corp.]$_{Organization}$ in [2006]$_{Time}$.

In this example, a person name consisting of one word, a two-word company name and a temporal expression have been detected and classified. State-of-the-art NER systems for English produce near-human performance. For example, the best system entering MUC-7 scored 93.39% of F-measure while human annotators scored 97.60% and 96.95% (see also Elaine Marsh, Dennis Perzanowski, "MUC-7 Evaluation of IE Technology: Overview of Results", 29 April 1998 PDF, and MUC-07 Proceedings (Named Entity Tasks)).

NER systems have been created that use linguistic grammar-based techniques as well as statistical models such as machine learning. Hand-crafted grammar-based systems typically obtain better precision, but at the cost of lower recall and months of work by experienced computational linguists. Statistical NER systems typically require a large amount of manually annotated training data. Semi-supervised approaches have been suggested to avoid part of the annotation effort. Many different classifier types have been used to perform machine-learned NER, with conditional random fields being a typical choice. Each of these techniques, or any combination thereof, may be used in the present invention.

In a preferred embodiment of the present invention, the step of checking if one or more words of the text fragment comprise a meaning corresponding to one of a predefined set of one or more semantic options is performed using a DistilBert NER algorithm. A version of this algorithm is described on https://nlp.johnsnowlabs.com/2021/08/05/distilbert_base_token_classifier_o ntonotes_en.html, and can be downloaded via the same URL.

NER algorithms typically work with trust levels providing an assessment of the confidence that a word or a set of words corresponds to a semantic option. In a preferred embodiment, step b) comprises providing a semantic trust level for the one or more words of the text fragments, the semantic trust level indicative of the confidence that the one or more words of the text fragments comprise a meaning corresponding to one of a predefined set of one or more semantic options. The step of checking if one or more words of the text fragment comprise a meaning corresponding to one of a predefined set of one or more semantic options may preferably comprise comparing a confidence level of the one or more words with a confidence level threshold, said confidence level threshold dependent on the semantic trust level for the one or more words. Furthermore, the semantic trust level may also be used in further steps of the present invention in order to better compare and/or correct the one or more words.

The confidence level threshold is illustrated in fig. 8 by the line (40) indicating that the semantic trust level is high for words ("hay", "bra", "barnaby", "medahaul", "dorantotley") which are assessed to correspond to a semantic option, in this case a location, compared to the other words in the text fragment. In the shown example, the confidence trust level threshold is set to 0.95 for words for which the semantic trust level is high, e.g. at least 0.5, whereas the confidence trust level threshold is set to 0.85 for words for which the semantic trust level is low, e.g. lower than 0.5. The confidence trust can be directly compared to the confidence trust level threshold for the word as obtained by the generic speech recognition algorithm, where one sees that certain words such as "hay" and "barnaby" which have a relative high confidence level, still have a lower value than the confidence trust level threshold for these words, indicating that the words at these positions in the text fragment could require correction by replacing them with entries from a database. As a result, the generic speech algorithm must be very confident of these words if they are not to be corrected by an entry in one of the databases.

Note that in the above embodiment, the confidence level threshold preferably is dependent on the semantic trust level for the one or more words in accordance with a predefined set of rules, i.e. the dependence of the confidence level threshold on the semantic trust level is taken according to a pre-defined prescription, for instance:

- if the semantic trust level of the one or more words is at least 50%, the confidence level threshold is 0.95, and if the semantic trust level of the one or more words is less than 50%, the confidence level threshold is 0.85,
- the confidence level threshold (CLT) is computed in function of the semantic trust level (SLT) as:

$$CLT = 0.85 + 0.10 * SLT,$$

- the confidence level threshold (CLT) is equal to the semantic trust level (SLT), or
- another type of dependence wherein the CLT does not decrease when the SLT increases.

Note that confidence levels and trust levels are typically values between 0 and 1.
The STT engine is further configured to perform the step of:
c) if one or more words of the text fragment corresponds to a semantic option: comparing said one or more words with a set of entries in a database corresponding to said semantic option (7) and computing a trust level score for each of said entries, thereby obtaining an optimal entry, preferably said optimal entry having the highest-trust level score.
Herein, the database corresponding to the semantic option is adaptable, and the database corresponding to the semantic option is configured to be updated on the basis of a current state of the SCS. Updating the database of at least one and preferably all of the semantic options, can be achieved via a context generator (19), which is configured to keep the databases up to date on the basis of the contextual information, i.e. the current state of the speech communication system.
For speech communication systems, and in particular for passenger information systems and conferencing systems, the information that needs to be presented to the recipient, is basically intended to bring the recipient up-to-date, in correspondence with all information known to the SCS, i.e. in correspondence with a current state of the SCS. As the state of the SCS can change with time, the database can be adapted appropriately.
In the above, a database of entries is available for each of the semantic options the STT engine is configured to check for. For instance, if the predefined set of semantic options comprises the following three semantic options: time, location and number, then the three databases are available, each corresponding to one of the three semantic options. If the SCS is a PIS on board of a train, the database corresponding to the option 'time', may comprise a set of arrival and/or departure times taken from a time table for the train, the database corresponding to the option 'location' may comprise a set of station names on the route taken by the train, and the option 'number' may comprise a set of carriage numbers the train is composed off. Hence, the state of the SCS clearly changes if the train is used to take another route, leading to an update of the databases with regards to departure/arrival times and stations on the route. If the train changes composition with respect to carriage, also the database corresponding to the semantic option 'number' is updated. Furthermore, the current time and location of the train can also be known to the SCS, which allows an update of the databases, for instance by deleting earlier arrival/departure times from the database corresponding to the option 'time' and deleting station names of stations which have been passed. Also for instance, if the predefined set of semantic options comprises the following three semantic options: person name, terminology and number, then the three databases are available, each corresponding to one of the three semantic options. If the SCS is a conferencing system in a moderated meeting, the database corresponding to the option 'person name', may comprise a set of meeting participants taken from a meeting invite in a calendar, the database corresponding to the option 'terminology' may comprise a set of terms related to the meeting agenda, and the option 'number' may comprise a set of budget values related to the meeting agenda. Hence, the state of the SCS clearly changes if the conferencing system is used for another meeting, leading to an update of the databases with regards to the person name, terminology and numbers. Furthermore, the current meeting agenda and participants can also be known to the SCS, which allows an update of the databases, for instance by adding or removing participant names from the database corresponding to their presence and updating meeting terminology upon agenda changes.
In a preferred embodiment, more than one database of entries, for instance 2, 3, 4 or more databases of entries, are available for at least one, and preferably each, of the semantic options. Hereby, each of said databases for the semantic option comprises a dynamical indicator which is indicative of a prior probability that an entry from that database is the optimal entry. For instance, for a PIS on a train whereby the semantic option refers to a location name, three databases for 'location name' may be available:

- a first database comprising entries corresponding to the remaining stations on the route of the train, having a high dynamical indicator,
- a second database comprising entries corresponding to all stations on the route of the train, preferably with the exception of the remaining stations on the route of the train, this second database having an intermediate dynamical indicator, and
- a third database comprising entries corresponding to all stations which are served by the train company, preferably with the exception of the stations on the route of the train, the third database having a low dynamical indicator.

For instance, for a CS in a moderated meeting whereby the semantic option refers to a person name, three databases for 'person name' may be available:

- a first database comprising entries corresponding to the meeting participants, having a high dynamical indicator,
- a second database comprising entries corresponding to all people invited to the meeting, preferably with the exception of the meeting participants, this second database having an intermediate dynamical indicator, and
- a third database comprising entries corresponding to all relevant person names with respect to the meeting participants and the meeting subject, the third database having a low dynamical indicator.

Preferably said indicator is taken into account when computing a trust level score for an entry and/or for obtaining the optimal entry.

Comparing the one or more words identified as corresponding to a semantic option with a set of entries in a database corresponding to said semantic option, and computing a trust level score for each of said entries can be performed in a number of ways. Preferably, hereby the one or more words which are obtained by the generic speech recognition algorithm are compared to an entry in the database by a scoring algorithm, wherein scores are awarded in case of correspondences between the one or more words and the entry and/or penalty scores are deducted in case of discrepancies. The obtained score can then preferably be used as a trust level, or can be preferably used to compute a trust level.

In a preferred embodiment, a semantic trust level for the one or more words of the text fragments is provided during step b), as discussed above. Hereby, in step c), the trust level score for an entry may preferably be computed taking into account the semantic trust level for the one or more words, and/or the trust level score for an entry may preferably be compared to a threshold trust level score, said threshold trust level score being obtained taking into account the semantic trust level, preferably the threshold trust level score being the same as the confidence level threshold which was disclosed earlier in this document. Hence, in case the semantic trust level is high, the trust level score for an entry may be higher compared to when the semantic trust level is low, and in case the semantic trust level is low, the trust level score for an entry may be lower compared to when the semantic trust level is high. Additionally or alternatively, in case the semantic trust level is high, the threshold trust level score may be lower compared to when the semantic trust level is low, and in case the semantic trust level is low, the threshold trust level score may be higher compared to when the semantic trust level is high. Note that the decision for correcting the text fragment (as in step d) by replacing one or more words with an entry, may preferably depend on the trust level score for said entry, and/or the trust level score threshold for said entry. The STT engine is also configured to perform the step of:

d) correcting each text fragment by replacing the one or more words which comprise a meaning corresponding to one of a predefined set of one or more semantic options with said optimal entry, thereby obtaining a set of corrected text fragments

Correction of the one or more words which have been identified as belonging to one of the predefined set of semantic options with the optimal entry, e.g. the entry having the highest-trust level, allows to better convert speech to text within the context of the speech communication system, in particular a passenger information system. This is due to certain terms, such as names, times, dates, jargon, etc. having a higher probability of being spoken within the context of the speech communication system.

In a preferred embodiment, the optimal entry is obtained by taking into account:

- the confidence level for the one or more words as provided by the generic speech recognition algorithm;
- the semantic trust level indicative of the confidence that the one or more words of the text fragments comprise a meaning corresponding to one of a predefined set of one or more semantic options;
- the trust level score computed for each entry, and/or
- the threshold trust level score for each entry.

Preferably, the optimal entry is obtained taking into account all of: the confidence level for the one or more words, the semantic trust for the one or more words, the trust level score computed for each entry, and the threshold trust level score for each entry. The STT engine is also configured to perform the step of:

e) converting the set of corrected text fragments to a presentable text (8),

This is particularly necessary when the text fragments are overlapping, and may preferably comprise deleting double word sets in the corrected text when the text fragments are concatenated. Furthermore, this step e) may comprise adding punctuation and/or correcting uppercase/lowercase letters (8). This step e) may also comprise augmenting the text with for example hyperlinks and/or converting spelled-out numbers to arabic numerals.

The result of the comparison and correction steps d) and e) is illustrated in figures 10 and 11. Figure 10 shows a text fragment not containing any words corresponding to a semantic option. As a result, the threshold trust level score (41), which in this case is equal to the confidence level threshold, is equally high for each word and is basically set to a general threshold level. Any word having a confidence level obtained by the generic speech recognition algorithm which is higher than this general threshold level will be accepted as the correct word in the final text. Figure 11 shows a text (a portion of the text from figure 8) having multiple words corresponding to a semantic option, i.c. a location, as illustrated by the increased threshold trust level score (42) in the location of these multiple words. Note that the threshold trust level score is in this case also equal to the confidence level threshold. In contrast with figure 8, which shows the situation prior to step d) and e), certain entries in the database related to the semantic option 'location' have a higher trust level score than the confidence level of the words obtained by the generic speech recognition algorithm, the trust level score being higher than the threshold trust level score. As a result, these entries from the database ("Habrough", "Barnetby", "Dore and Totley") are used to correct the words in the initial text fragment.

Please also note that the confidence level threshold and/or the threshold trust level score or preferably at least 0.5. This may ensure that at most one entry in a database will have a trust level score higher than the confidence level threshold and/or the threshold trust level score, thereby allowing easy identification of the optimal entry to be used for correction.

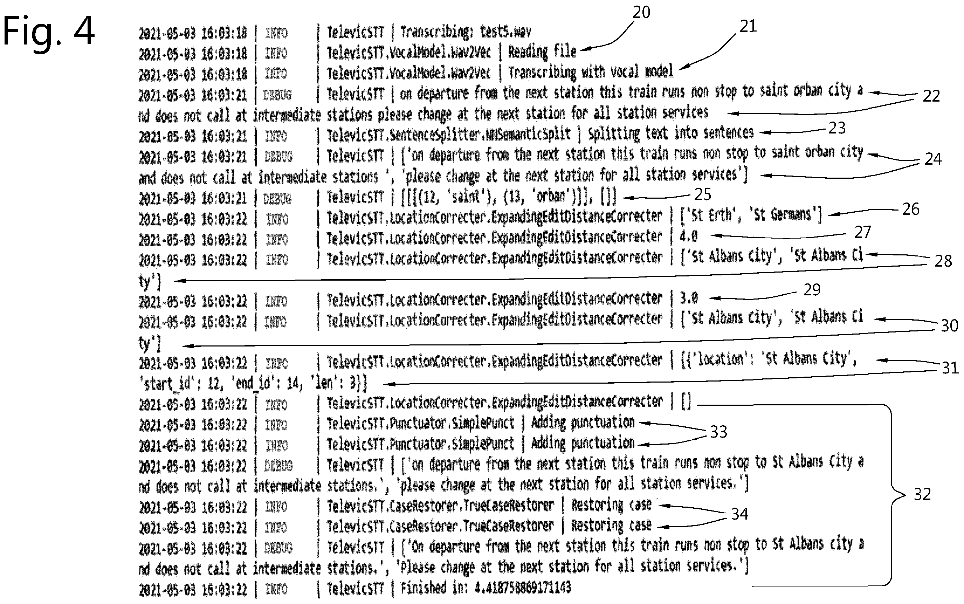

An example of the operation of an STT engine according to the present invention is given in fig. 4. A test speech file 'test5.wav' is read (20) and is converted to a text fragment with a generic speech recognition engine 'wav2vec' (21). The text fragment is thus obtained (22). Semantic segmentation is performed on this text fragment (23), the result of which (24) is a set of two text fragments, which do not overlap but each of which have a contextual meaning. Then, the NER checks for words belonging to a semantic options (25), and finds 2 words ('saint' and 'orban' on places 12 and 13 in the text) which relate to a location name. The database corresponding to 'location name' contains a number of entries, including 'St Erth', 'St Germans' and 'St Albans City', and first compares the first two (26) and afterwards the latter (28) with the identified words. In an embodiment of the present invention, this can preferably be done by substituting each of the entries into the text fragment at the locations of the one or more words that were identified as corresponding to a semantic option and computing a corrected score, i.e. a score for the one or more words computed on the basis the complete text fragment when corrected with entries from the database. A score is obtained by the comparison, giving '4.0' (27) for 'St Erth' and 'St Germans' and '3.0' (29) for 'St Albans City'. Note that the highest-trust level in this case corresponds to the lowest score. As a result, 'St Albans City' is used to replace the words at places 12-14 in the text fragment (31). The text fragments are then prepared for being shown to a recipient (32) by adding punctuation (33) and restoring cases (34) for each text fragment. Since in the present example the text fragments had been semantically segmented, they can be easily concatenated to obtain the full concatenated text.

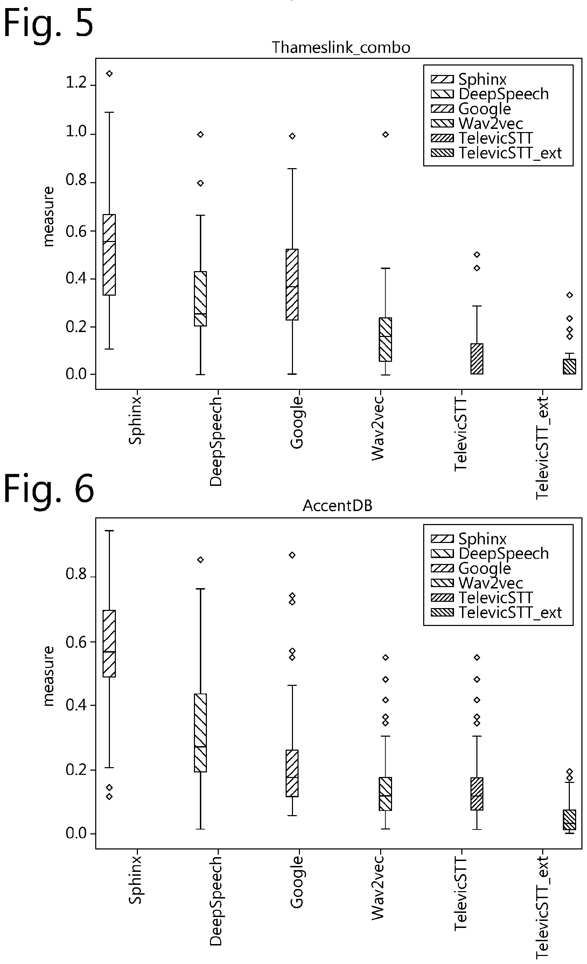

In figures 5 and 6, two different speech fragments are used to test and compare the present invention to other speech-to-text conversion methods and systems.

For fig. 5, referring to 'Thameslink PRM', a database of railway specific announcements was used. For example, the following speech was recorded and converted to text: "We will be calling at Barnehurst and Barming. The next station is Norwood Junction our final destination."

For fig. 6, referring to 'AccentDB', the following speech was recorded and converted to text: "Please call Stella ask her to bring these things with her from the store. Six Spoons of fresh snow peas five thick slabs of blue cheese and maybe a snack for her brother Bob. We also need a small plastic snake and a big toy frog for the kids. She can scoop these things into three red bags and we will go meet her Wednesday at the train station."

The comparisons in all three cases (figs. 5-6) in each case gave a clearly improved conversion for embodiments according to the present invention ('TelevicSTT' and 'TelevicSTT_ext', the last two on the right) compared to four other speech-to-text methods which do not perform a correction of the text on the basis of up-to-date databases for semantic options ('Sphinx', 'DeepSpeech', 'Google' and 'Wav2vec').

This is also illustrated in figures 9A and 9B. Figure 9A shows that the present invention ("STT_Televic") makes considerably less errors with respect to converting location names from speech to text than three other, state-of-the-art systems ("SOTA1", "SOTA2", "SOTA3"). Hereby, a sample speech was converted to text using the present invention and three other methods, and the obtained text were compared to the original speech. This is also illustrated in figure 9B, which shows the word error rate (WER), defined as the sum of the number of substitutions, deletions and insertions, divided by the total number of words in the original speech.

The present invention can also applied to a conferencing system (CS). Hence, in an embodiment, the speech communication system is a conferencing system, preferably a moderated conferencing system. In a conferencing system, typically a set of speech capturing devices are present for different speakers in a meeting. In some applications, STT transcription is desired or even required, allowing the speech of a speaker to be shown on screen, or even to be translated. This requires a sufficiently correct STT engine, also for meetings on topics which could be very specialized and for which generic speech recognition algorithms are not always good enough. Hence, correction of one or more words using the method of the present invention on the basis of adaptable databases offers a big advantages over existing speech recognition algorithms. Hereby, each database corresponding to a semantic option can be updated on the basis of e.g.:

- a predefined agenda: for instance if a certain item on the agenda is being discussed, the databases may be adapted on the basis of the current item being discussed, and once the next item is started, the databases may be updated on the basis of said next item. Hereby, a moderator may provide an input to the CS when the next item on the agenda is to be discussed, and/or
- a current speaker: the databases may be adapted on the basis of who is the current speaker, for instance on the basis of previous speeches from said speaker or on the background of the current speaker.
- a meeting participant list: for instance person name databases can be used to correctly transcribe the names of meeting participants.

**Claims**

1. A method for converting speech to text for a speech communication system (SCS), comprising the steps of:

   - capturing a speech;
   - converting the speech to a text by a speech-to-text (STT) engine, and
   - making the text available,

   wherein the STT engine is configured to perform the steps of:

   a) converting the speech to a set of text fragments using a generic speech recognition algorithm;
   b) for each text fragment: checking if one or more words of the text fragment comprise a meaning corresponding to one of a predefined set of one or more semantic options;
   c) if one or more words of the text fragment corresponds to a semantic option: comparing said one or more words with a set of entries in a database corresponding to said semantic option and computing a trust level score for each of said entries, thereby obtaining an optimal entry having the highest-trust level score,
   d) correcting each text fragment by replacing the one or more words which comprise a meaning corresponding to one of a predefined set of one or more semantic options with said optimal entry, thereby obtaining a set of corrected text fragments and
   e) converting the set of corrected text fragments to a presentable text,

   wherein the database corresponding to the semantic option is adaptable, and the database corresponding to the semantic option is configured to be updated on the basis of a current state of the SCS.

2. A method according to claim 1, wherein step a) comprises the steps of: first composing a set of speech fragments from the speech and then converting each speech fragment to a text fragment using the generic speech recognition algorithm, thereby obtaining the set of text fragments.

3. A method according to claim 2, wherein the set of speech fragments are obtained by taking fixed-width speech fragments from the speech.

4. A method according to any of the preceding claims, wherein in step a), semantic sentence segmentation is performed on the set of text fragments, each text fragment relating to a contextually meaningful text fragment.

5. A method according to claim 4, wherein the semantic sentence segmentation comprises the steps of:

   - sentence splitting, and
   - semantics-based and/or syntaxis-based sentence parsing.

6. A method according to any of the preceding claims, wherein step a) comprises the step of: a1) providing a confidence level for one or more words, and preferably for each word, of a text fragment, preferably providing a confidence level for each word in each text fragment.

7. A method according to any of the preceding claims, wherein the predefined set of semantic options comprise any or any combination of: location name, departure time, arrival time, carriage number, destination name, transport velocity, number, date, event, fact, language, law, direction, product, person's name, website, branding specific word, abbreviation, swearing word.

8. A method according to any of the preceding claims, wherein in step c), the one or more words which are obtained by the generic speech recognition algorithm are compared to an entry in the database by a scoring algorithm, wherein the score obtained by said scoring algorithm for said one or more words is used to compute a trust level.

9. A method according to claim 8, wherein in step c) the scoring algorithm comprises substituting each of the entries into the text fragment at the locations of the one or more words that were identified as corresponding to a semantic option, and computing a corrected score.

10. A method according to any of the preceding claims, wherein step b) comprises providing a semantic trust level for the one or more words of the text fragments, the semantic trust level indicative of the confidence that the one or more words of the text fragments comprise a meaning corresponding to one of a predefined set of one or more semantic options.

11. A method according to claims 6 and 10, wherein step b) of checking if one or more words of the text fragment comprise a meaning corresponding to one of a predefined set of one or more semantic options, comprises comparing said confidence level of the one or more words with a confidence level threshold, said confidence level threshold dependent on the semantic trust level for the one or more words.

12. A method according to any of the preceding claims, wherein step e) comprises adding punctuation and/or correcting uppercase and/or lowercase letters (8).

13. A method according to any of the preceding claims, wherein the step of capturing the speech is initiated by a trigger.

14. A speech communication system (SCS), comprising a speech-to-text conversion system which comprises a speech capturing device, a processing unit comprising a speech-to-text (STT) engine and a text handling device, wherein the STT engine is configured to perform the steps of:

a) converting the speech captured by the speech capturing device to a set of text fragments using a generic speech recognition algorithm;
b) for each text fragment: checking if one or more words of the text fragment comprise a meaning corresponding to one of a predefined set of one or more semantic options;
c) if one or more words of the text fragment corresponds to a semantic option: comparing said one or more words with a set of entries in a database corresponding to said semantic option and computing a trust level score for each of said entries, thereby obtaining an optimal entry having the highest-trust level score,
d) correcting each text fragment by replacing the one or more words which comprise a meaning corresponding to one of a predefined set of one or more semantic options with said optimal entry, thereby obtaining a set of corrected text fragments and
e) converting the set of corrected text fragments to a presentable text,

wherein the database corresponding to the semantic option is adaptable, and the database corresponding to the semantic option is configured to be updated on the basis of a current state of the SCS, whereby the SCS is further configured to make the presentable text available by the text handling device.

15. A system according to claim 14, whereby the speech communication system is a passenger information system (PIS) or a conferencing system (CS).

# Fig. 1

# Fig. 2

# Fig. 3

Fig. 4

```
2021-05-03 16:03:18 | INFO   | TelevicSTT | Transcribing: test5.wav
2021-05-03 16:03:18 | INFO   | TelevicSTT.VocalModel.Wav2Vec | Reading file                    ← 20
2021-05-03 16:03:18 | INFO   | TelevicSTT.VocalModel.Wav2Vec | Transcribing with vocal model   ← 21
2021-05-03 16:03:21 | DEBUG  | TelevicSTT | on departure from the next station this train runs non stop to saint orban city a ← 22
nd does not call at intermediate stations please change at the next station for all station services
2021-05-03 16:03:21 | INFO   | TelevicSTT.SentenceSplitter.NNSemanticSplit | Splitting text into sentences ← 23
2021-05-03 16:03:21 | DEBUG  | TelevicSTT | ['on departure from the next station this train runs non stop to saint orban city ← 24
and does not call at intermediate stations ', 'please change at the next station for all station services']
2021-05-03 16:03:21 | DEBUG  | TelevicSTT | [[[(12, 'saint'), (13, 'orban')]], []]   ← 25
2021-05-03 16:03:22 | INFO   | TelevicSTT.LocationCorrecter.ExpandingEditDistanceCorrecter | ['St Erth', 'St Germans'] ← 26
2021-05-03 16:03:22 | INFO   | TelevicSTT.LocationCorrecter.ExpandingEditDistanceCorrecter | 4.0 ← 27
2021-05-03 16:03:22 | INFO   | TelevicSTT.LocationCorrecter.ExpandingEditDistanceCorrecter | ['St Albans City', 'St Albans Ci ← 28
ty']
2021-05-03 16:03:22 | INFO   | TelevicSTT.LocationCorrecter.ExpandingEditDistanceCorrecter | 3.0 ← 29
2021-05-03 16:03:22 | INFO   | TelevicSTT.LocationCorrecter.ExpandingEditDistanceCorrecter | ['St Albans City', 'St Albans Ci ← 30
ty']
2021-05-03 16:03:22 | INFO   | TelevicSTT.LocationCorrecter.ExpandingEditDistanceCorrecter | [{'location': 'St Albans City', ← 31
'start_id': 12, 'end_id': 14, 'len': 3}]
2021-05-03 16:03:22 | INFO   | TelevicSTT.LocationCorrecter.ExpandingEditDistanceCorrecter | []
2021-05-03 16:03:22 | INFO   | TelevicSTT.Punctuator.SimplePunct | Adding punctuation
2021-05-03 16:03:22 | INFO   | TelevicSTT.Punctuator.SimplePunct | Adding punctuation              33
2021-05-03 16:03:22 | DEBUG  | TelevicSTT | ['on departure from the next station this train runs non stop to St Albans City a
nd does not call at intermediate stations.', 'please change at the next station for all station services.']     32
2021-05-03 16:03:22 | INFO   | TelevicSTT.CaseRestorer.TrueCaseRestorer | Restoring case
2021-05-03 16:03:22 | INFO   | TelevicSTT.CaseRestorer.TrueCaseRestorer | Restoring case              34
2021-05-03 16:03:22 | DEBUG  | TelevicSTT | ['On departure from the next station this train runs non stop to St Albans city a
nd does not call at intermediate stations.', 'Please change at the next station for all station services.']
2021-05-03 16:03:22 | INFO   | TelevicSTT | Finished in: 4.418758869171143
```

EP 4 174 848 A1

## Fig. 5

Thameslink_combo

## Fig. 6

AccentDB

## Fig. 7

Letter confidence — Confidence vs. ANYBODY TTRAVELLLING TTHRROUGH TOETHER HHAY BBRRA BARNABB

## Fig. 8

Confidence vs. Anybody travelling through toether hay bra barnabey Medahaul or Dorantotley (40)

## Fig. 9A

Percentage location errors

## Fig. 9B

Word error rate

# Fig. 10

Final word confidence, sentence 3

# Fig. 11

Fig. 12

Stream — mp3 → Audio in (1)

12 Trigger

9 — Noise Suppression

10 — Noise model retraining

context (participant names, meeting agenda, ...) — 11

STT (2) → Conferencing system API (3)

13 — fixed-width overlapping audio cutting

14 — wav2vec2

15 — sequence alignment

16 — Sentence splitter (5)

17 — Semantic/ syntactic Sentence parsing

6 — contextual word correction

8 — Case & Punctuation restoration

18

- Person name — 18h
- Terminology — 18i
- Law code — 18j
- Country name — 18k
- Abbreviation — 18l
- Political party name — 18m
- Budget numbers — 18n

Europäisches
Patentamt

European
Patent Office

Office européen
des brevets

# EUROPEAN SEARCH REPORT

Application Number

EP 21 20 5738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 009 041 B2 (ZAVALIAGKOS GEORGE [US]; GANONG III WILLIAM F [US] ET AL.) 14 April 2015 (2015-04-14) * figures 3,4A * * column 4, lines 30-39 * * column 8, line 44 - column 9, line 3 * * column 9, lines 37-43 * * column 10, lines 5-9 * * column 10, line 65 - column 11, line 11 * * column 11, line 57 - column 13, line 35 * * column 13, lines 33-35 * ----- | 1-15 | INV. G10L15/26 ADD. G10L15/18 |
| X | US 2021/149996 A1 (BELLEGARDA JEROME R [US]) 20 May 2021 (2021-05-20) * figures 7B,9 * * paragraphs [0244] - [0252] * ----- | 1,14 | |
| X | CN 112 183 073 A (BEIJING QINGDUN INFORMATION TECH CO LTD) 5 January 2021 (2021-01-05) * figure 1 * ----- | 1,14 | TECHNICAL FIELDS SEARCHED (IPC) G10L G06F |

The present search report has been drawn up for all claims

| Place of search | Date of completion of the search | Examiner |
|---|---|---|
| Munich | 1 April 2022 | Chétry, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 5738

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2022

| Patent document cited in search report | | Publication date | Patent family member(s) | | Publication date |
|---|---|---|---|---|---|
| US 9009041 | B2 | 14-04-2015 | US 2013030804 A1 | | 31-01-2013 |
| | | | US 2015221306 A1 | | 06-08-2015 |
| US 2021149996 | A1 | 20-05-2021 | NONE | | |
| CN 112183073 | A | 05-01-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9558743 B2

**Non-patent literature cited in the description**

- **ELAINE MARSH ; DENNIS PERZANOWSKI.** *MUC-7 Evaluation of IE Technology: Overview of Results,* 29 April 1998